# EUROPÄISCHE PATENTSCHRIFT

(11) **EP 0 403 865 B1**
(45) Veröffentlichungstag und Bekanntmachung des Hinweises auf die Patenterteilung: **03.11.1993**
(21) Anmeldenummer: 90110493.5
(22) Anmeldetag: 01.06.1990
(51) Int. Cl.: B65G 47/61

(54) **Übergabevorrichtung für das Fördergut einer Fördereinrichtung einer innerbetrieblichen Hängeförderung**
Transfer device for products to be conveyed by an internal overhead conveyor
Dispositif de transfert pour les produits d'un transporteur aérien interne

(30) Priorität: 21.06.1989 DE 8907607 U
(43) Veröffentlichungstag der Anmeldung: 27.12.1990
(73) Patentinhaber: Gärtner, Franz, D-97656 Oberelsbach (DE)
(72) Erfinder: Gärtner, Franz, D-97656 Oberelsbach (DE)
(74) Vertreter: Patentanwälte Dr. Solf & Zapf

(56) Entgegenhaltungen:
- DE-A- 2 924 110
- DE-C- 3 735 607

## Beschreibung

Die Erfindung betrifft eine Übergabevorrichtung für das Fördergut einer Fördereinrichtung einer innerbetrieblichen Hängeförderung der im Oberbegriff des Anspruchs 1 angegebenen Art.

Eine derartige Übergabevorrichtung ist aus der DE-C-3 735 607 bekannt. Bei dieser bekannten Übergabevorrichtung umfaßt die Übernahmeeinrichtung einen an einem Hubwagen befestigten Greifarm, der in Richtung der Bügel verläuft und an seinem freien Ende einen Greifhaken umfaßt. Der Greifarm ist über der Tragwagen-Tragstange angeordnet und aus einer Stellung, in der der Greifhaken über dem Hakenbogen des Bügelhakens angeordnet ist, in eine Stellung unterhalb des Hakenbogens sowie in Eingriff mit diesem verschwenkbar, und der Haken kommt mit seinem Hakenbogen von der Tragstange dadurch frei, daß der Greifarm nach oben geschwenkt und nachfolgend quer zur Transportrichtung der Tragwagen weggeschoben wird. Diese Konstruktion der bekannten Übergabevorrichtung ist aufwendig, arbeitet relativ langsam und arbeitet bei verschwenkten Bügelhaken nicht einwandfrei.

Aufgabe der Erfindung ist, eine einfach aufgebaute Übergabevorrichtung zu schaffen, die schnell und einwandfrei auch bei verschränkten Bügelhaken arbeitet.

Diese Aufgabe wird durch die Merkmale des Hauptanspruches gelöst. Vorteilhafte Weiterbildungen der Erfindung werden in den Unteransprüchen gekennzeichnet. Anhand des in der Zeichnung dargestellten Ausführungsbeispiels wird die Erfindung im folgenden näher erläutert. Es zeigen:
- Fig. 1 bis 4: jeweils im Längsschnitt den Übernahmebereich der Übergabevorrichtung in verschiedenen Übernahmestellungen;
- Fig. 5: im Längsschnitt den Übergabebereich der Übergabevorrichtung in der Übergabestellung;
- Fig. 6: eine perspektivische Darstellung der Übergabevorrichtung.

Die erfindungsgemäße Übergabevorrichtung 6 ist eine Zusatzvorrichtung für eine Hängefördervorrichtung, von der lediglich die Tragstange 1 eines Förderwagens dargestellt ist und die im übrigen der Hängefördervorrichtung entsprechen kann, wie sie z. B. in der EP-OS 0 164 109 bzw. in dem in dieser Druckschrift zitierten Stand der Technik beschrieben wird und aus diesem Grunde im Rahmen der vorliegenden Erfindung nicht näher erläutert zu werden braucht.

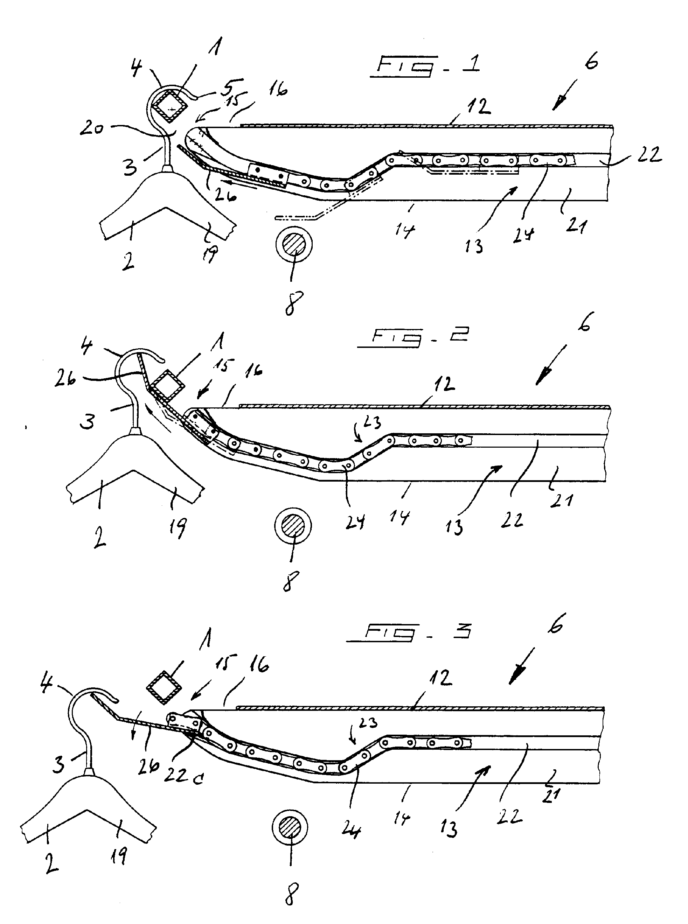

Auf der Tragstange 1 hängen hintereinander Kleiderbügel 2, von denen nur einer dargestellt ist; auf den Bügeln 2 hängen z. B. Bekleidungsstücke (nicht dargestellt). Die Haken 3 der Bügel 2 umgreifen mit ihrem Hakenbogen 4 die Tragstange 1, wie in Fig. 1 erkennbar ist, wobei die Hakenspitze 5 aller Bügel 2 sich zwar auf der gleichen Seite der Tragstange befinden, jedoch teilweise verschränkt sein können, so daß einige Haken übereinander angeordnet sind.

Der Tragwagen (nicht dargestellt), auf dessen Tragstange 1 die Bügel 2 hängen, wird wie üblich antransportiert und zur Abnahme der Bügel von der Tragstange mit der erfindungsgemäßen Übergabevorrichtung 6 gestoppt. Die Übergabevorrichtung 6 übernimmt die Bügel 2 en bloc von der Tragstange 1 und übergibt sie en bloc auf eine sich drehende Schraubenwindungen 7 aufweisende Transportstange 8, auf der die Bügel durch die Windungen 7, der sich drehenden Transportstange 8 abtransportiert werden. Die Übergabe der Bügel kann aber auch auf eine andere Einrichtung der Fördervorrichtung od. dgl. erfolgen, z. B. auf eine andere Tragstange eines anderen Tragwagens.

Die erfindungsgemäße Übergabevorrichtung weist zwei im Abstand voneinander und parallel zueinander angeordnete hochkantstehende brettförmige Seitenwandungen 9 und 10 aus z. B. Kunststoff oder Holz od. dgl. auf, die im rückwärtigen Bereich über einen Verbindungssteg 11 und außerdem über eine Deckenwandung 12 miteinander in Verbindung stehen und somit einen etwa quaderförmigen Innenraum 13 bilden.

Im vorderen Bereich ist die Unterkante 14 der Seitenwandungen 9, 10 kufenförmig schräg nach oben zur abgerundeten Spitze 15 der Oberkante 16 der Seitenwandungen 9, 10 führend ausgebildet, so daß ein Freiraum 17 unter den Schrägen 18 verbleibt (Fig. 6), so daß die seitlich auskragenden Arme der Bügel nicht mit den Wandungen 9, 10 beim seitlichen Antransport des Tragwagens bzw. die erfindungsgemäße Übergabevorrichtung, so nahe wie möglich am Tragbalken 1 angeordnet werden können, und zwar im Zwischenraum 20 (Fig. 1) zwischen den Spitzen 5 der Hakenbogen 4 der Haken 3 der Bügel 2 bzw. seitlich unter dem Tragbalken und der jeweiligen unter der Spitze 5 angeordneten Bügelschulter 19 der Bügel 2.

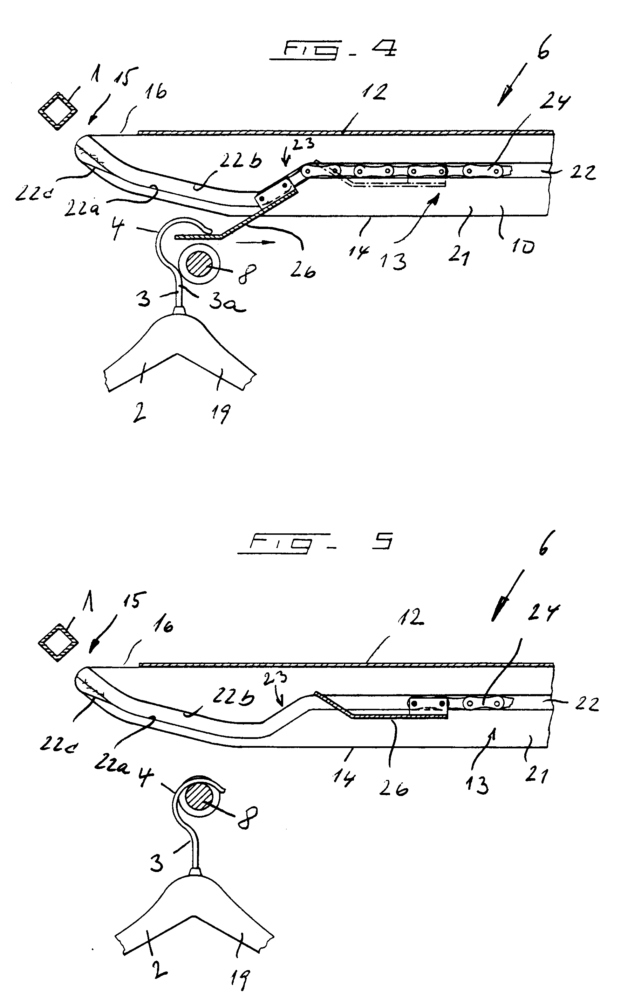

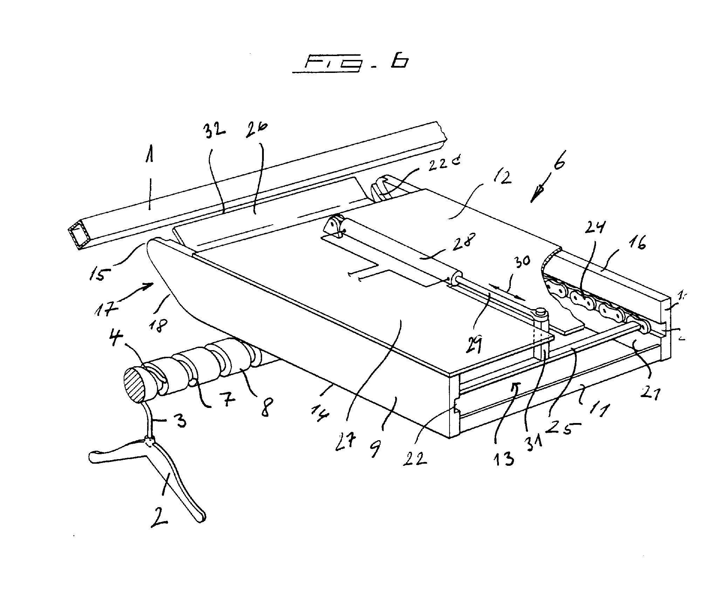

In die Innenfläche 21 der Seitenwandungen 9, 10, ist jeweils eine C-förmige Führungsnut 22 in Längsrichtung der Wandungen eingebracht. Die Führungsnuten 22, die eine untere Führungskante 22a und eine obere Führungskante 22b aufweisen (Fig. 4), sind sich gegenüberliegend und im hinteren Bereich etwa in der Breitenmitte der Wandungen angeordnet. Kurz vor Beginn des nach oben kufenförmig abgeschrägten Bereichs der Wandungen 9, 10 sind die Führungsnuten 22 mit einer Schräge 23 nach unten geneigt ausgeführt und verlaufen danach schräg zur Spitze 15 nach oben, wobei sie in der Spitze 15 zur Spitze nach vorne offen auslaufen. Wesentlich ist, daß der Endbereich 22c der Führungskante 22a zur Spitze 15 hin nach unten abgeknickt ist, so daß sich die Führungsnut 22 an der Spitze 15 trichterförmig öffnet.

In den Führungsnuten 22 wird jeweils eine Gliederkette 24 vor- und zurückgleitbar geführt. Beide Gliederketten 24 stehen an ihrem hinteren Ende über einen biegesteifen Verbindungssteg 25 (Fig. 6) miteinander in Verbindung. Im vorderen Endbereich stehen sie über ein biegesteifes Übernahmeblech 26 miteinander in Verbindung. Das Übernahmeblech 26 sitzt jeweils am vorderen Glied bzw. an den vorderen Gliedern der Ketten und ragt nach vorne und ist im vorderen Endbereich geringfügig nach oben abgewinkelt.

Wie bereits erwähnt, sind die Spitzen 15 der Seitenwandungen 9, 10 unmittelbar seitlich unter dem Tragbalken 1 eines gestoppten Tragwagens angeordnet. Die Transportstange 8 dagegen ist - wie abgebildet - unterhalb der Übergabevorrichtung im Bereich kurz vor der Schräge 23 positioniert.

Für den Antrieb der Ketten in eine Vorwärts- und eine Rückwärtsbewegung (Pfeilrichtung 30 in Fig. 6), sitzt auf der Oberfläche 27 der Deckenwandung 12 eine Kolbenzylinderanordnung 28, deren Kolbenstange 29 nach hinten ragt und mit einem auf dem Verbindungssteg 25 festsitzenden nach oben ragenden Zapfen 31 verbunden ist, so daß die Bewegung der Kolbenstange 29 in Doppelpfeilrichtung 30 über die Ketten 24 auf das Übernahmeblech 26 übertragen wird.

Die Funktion der erfindungsgemäßen Übergabevorrichtung, die aus den beschriebenen Raumformen resultiert, ergibt sich aus den Fig. 1 bis 5.

Aufgrund der Positionierung der Übergabevorrichtung (Fig. 1) wird das Übernahmeblech 26 beim Vorschieben der Ketten 24 mit der Vorderkante bzw. Tragkante 32 unter der Tragstange 1 her in die Hakenbogen 4 der Haken 3 geschoben. Da das Übernahmeblech 26 danach noch ein Stück weiter nach vorne und oben geschoben wird, werden die Haken 3 bzw. die Bügel 2 von der Tragstange 1 abgehoben (Fig. 2). Danach gelangen die vorderen Kettenglieder der Ketten 24 in den Trichterbereich der Führungsnuten 22 und können gegenüber den nachfolgenden Kettengliedern nach unten abknicken, was selbsttätig aufgrund des Gewichts des Übernahmeblechs 26 und der daran hängenden Gegenstände erfolgt (Fig. 3). Der Trichterbereich ist derart ausgebildet, daß das Übernahmeblech lediglich soweit nach unten klappt, daß der vordere abgewinkelte Endbereich des Übernahmeblechs noch eine geringfügig nach oben geneigte Lage beibehält. Des weiteren sind der Trichterbereich und der sich anschließende Führungsbereich der Nuten 22 für die Ketten nach hinten so ausgebildet, daß beim anschließenden Zurückziehen der Ketten 24 das Übernahmeblech die nur geringfügig nach oben geneigte Lage beibehält, jedoch unter der Tragstange weggezogen werden kann, ohne daß die Haken der Bügel die Tragstange berühren. Beim weiteren Zurückziehen der Ketten bzw. des Übernahmeblechs, gelangen die Ketten in den Bereich der Schrägen 23 und Durchfahren die Schrägen. Dabei wird das Übernahmeblech über der Transportstange 8 nach unten geschwenkt, so daß der abgewinkelte vordere Endbereich des Übernahmeblechs etwa eine horizontale Lage über der Transportstange 8 einnimmt. Beim weiteren Zurückziehen des Übernahmeblechs stoßen die Bügelhakenstege 3a gegen die Transportstange 8, wobei die Spitzen 5 der Hakenbögen noch auf dem abgewinkelten Bereich des Übernahmeblechs lagern. Das Übernahmeblech wird dann noch weiter zurückgezogen, wobei die Transportstange 8 die Bügelhaken vom Übernahmeblech streift und übernimmt (Fig. 4, 5). Danach kann das Übernahmeblech wieder nach vorne geschoben werden und es wiederholt sich der Vorgang, wobei von einem anderen Tragwagen en bloc eine weitere Gruppe von Bügeln mit z. B. Bekleidungsstükken abgehoben und auf die Transportstange 8 abgegeben werden, die sich zwischenzeitlich selbsttätig geräumt hat.

## Patentansprüche

1. Übergabevorrichtung für das Fördergut einer Fördereinrichtung einer innerbetrieblichen Hängeförderung, mit der Haken (3) aufweisende, auf einer Tragstange (1) eines Tragwagens hintereinandergereiht hängende, Trageinrichtungen bildende Bügel (2) oder dergleichen vom Tragwagen auf eine andere Trag- oder weitere Transportvorrichtung übergeben werden, und mit einer die Bügel (2) en bloc mit einer Tragkante (32) vom Tragwagen abhebenden, quer zur Transportrichtung der Tragwagen vor- und zurückschiebbar angeordneten Übernahmeeinrichtung (26),
dadurch **gekennzeichnet**,
daß die Übernahmeeinrichtung (26) entlang einer zur Tragstange (1) hin ansteigenden Führungsbahn derart geführt ist, daß ihre Tragkante (32) unter der Tragstange (1) des Tragwagens her von unten in die Hakenbogen (4) der Haken (3) der Bügel (2) und anschließend noch ein Stück weiter nach vorne und oben bewegt wird, und daß die Führungsbahn anschließend an ihren ansteigenden Abschnitt nach unten abknickend so verläuft, daß die Übernahmeeinrichtung nach unten wegklappt und in die Führungsbahn zurücklaufend dadurch mit ihrer Tragkante soweit unterhalb an der Tragstange (1) vorbeiläuft, daß die Haken (3) mit ihren Hakenbogen (4) nicht mit der Tragstange (1) kollidieren.

2. Übergabevorrichtung nach Anspruch 1,
dadurch **gekennzeichnet,**
daß das Übernahmeeinrichtung (26) ein Tragblech ist, das im vorderen Endbereich geringfügig nach oben abgewinkelt ist.

3. Übergabevorrichtung nach Anspruch 1 und/oder 2,
dadurch **gekennzeichnet,**
daß das Tragblech (26) im hinteren Bereich an den Seitenkanten mit jeweils mindestens einem vorderen Endglied einer Gliederkette (24) in Verbindung steht, die an ihrem hinteren Ende über einen biegesteifen Verbindungssteg (25) miteinander verbunden sind, wobei die Gliederketten (24) in die Führungsbahn für das Tragblech bildende Führungsnuten (22) vor- und zurückgleitbar gelagert sind, die in den Innenflächen (21) von Seitenwandungen (9, 10) der Übergabevorrichtung (6) eingebracht sind.

4. Übergabevorrichtung nach einem oder mehreren der Ansprüche 1 bis 3,
dadurch **gekennzeichnet,**
daß die Führungsnuten (22) eine untere Führungskante (22a) und eine obere Führungskante (22b) aufweisen, sich gegenüberliegend angeordnet sind und etwa im mittleren Bereich ihrer Längserstreckung mit einer Schräge (23) nach unten geneigt ausgeführt sind und danach schräg nach oben laufen, wobei sie in einer Spitze (15), zur Spitze nach vorne offen, auslaufen und die Spitze jeweils an einer brettförmigen, hochkantstehenden Seitenwandung (9, 10) der Übergabevorrichtung (6) vorgesehen ist und dadurch gebildet wird, daß im vorderen Bereich die Unterkante (14) der Seitenwandung (9, 10) kufenförmig schräg nach oben zur abgerundeten Spitze (15) der Oberkante (16) der Seitenwandungen (9, 10) führend ausgebildet ist.

5. Übergabevorrichtung nach einem oder mehreren der Ansprüche 1 bis 4,
dadurch **gekennzeichnet**,
daß der Endbereich (22c) der untere Führungskanten (22a) zur Spitze (15) hin nach unten abgeknickt ist, so daß sich die Führungsnuten (22) an der jeweiligen Spitze (15) trichterförmig öffnen und dadurch das Wegklappen nach unten des Führungsblechs (26) gewährleistet wird.

6. Übergabevorrichtung nach einem oder mehreren der Ansprüche 1 bis 5,
dadurch **gekennzeichnet,**
daß die parallel zueinander angeordneten Seitenwandungen (9, 10) im rückwärtigen Bereich über einen weiteren Verbindungssteg (11) und außerdem über eine Deckenwandung (12) miteinander in Verbindung stehen und einen Innenraum (13) bilden.

7. Übergabevorrichtung nach einem oder mehreren der Ansprüche 1 bis 6,
**gekennzeichnet** durch
eine Antriebsvorrichtung für eine Vorwärts- und eine Rückwärtsbewegung der Ketten (24).

8. Übergabevorrichtung nach Anspruch 7,
dadurch **gekennzeichnet,**
daß die Antriebsvorrichtung eine Kolbenzylinderanordnung (28) ist, die auf der Oberfläche (27) der Deckenwandung (12) sitzt und deren Kolbenstange (29) nach hinten ragt und mit dem Verbindungssteg (25) verbunden ist.

9. Übergabevorrichtung nach einem oder mehreren der Ansprüche 3 bis 8,
dadurch **gekennzeichnet,**
daß unter den Seitenwandungen (9, 10) im Bereich unterhalb der Schrägen (23) eine Übernahmestange (8) angeordnet ist, die so positioniert ist, daß sie auch unter dem sich zurückbewegenden Tragblech (26) angeordnet ist, so daß sie die auf dem Tragblech (26) lagernden Bügelhaken (3) beim Zurückziehen des Tragbleches (26) en bloc vom Tragblech abstreift und die Bügelhaken (4) auf die Übernahmestange (8) rutschen.

10. Übergabevorrichtung nach Anspruch 9,
dadurch **gekennzeichnet,**
daß die Übernahmestange (8) Schraubenwindungen (7) für den selbsttätigen Abtransport der Bügel aufweist.

11. Übergabevorrichtung nach einem oder mehreren der Ansprüche 1 bis 10,
dadurch **gekennzeichnet,**
daß die Führungsnuten (22) im Querschnitt C-förmig ausgebildet sind.

## Claims

1. A transfer device for goods to be conveyed by an internal overhead conveyor, provided with hooks (3) on a support rail (1), transferring to a support rail (1) successive suspended support carriers forming a hanger (2) or the like of hanging equipment of support carriers of another support or further transport device, and with a support edge (32) of the support carrier which lifts hangers as one unit crossways to the transport direction of the reciprocating support carrier transfer device characterised in that the take up device (26) is driven along a guideway rising up to the rail (1) in such a manner that its support edge (32) is moved under the rail (1) of the support carrier downwards into the arch (4) of the hook (3) of the hanger (2) and then is moved a little further forwards and upwards, and that the guideway is then so bent downwards on its rising section that the take up device turns away downwards and passes by running back in the guideway thereby with its support edge so far underneath the rail (1) that the hooks (3) and their arches (4) do not collide with the rail (1).

2. A transfer device according to claim 1, characterised in that the take up device (26) is a carrier plate which is slightly bent upwards at the front end.

3. A transfer device according to claim 1 and/or 2, characterised in that the carrier plate (26) is connected at the rear on the side edges to at least one front end link of a linked chain (24) which are joined together at its rear end by a connector (25) which is resistant to bending, wherein the link chains (24) are mounted movably in the guide grooves (22) forming the guideway for the carrier plate, these grooves being brought into contact with the inside surfaces (21) of sidewalls (9, 10) of the transfer device.

4. A transfer device according to one or more of claims 1 to 3, characterised in that the guide grooves (22) have a lower guide edge (22a) and an upper guide edge (22b), are situated opposite each other and are inclined downwards with a slope (23) approximately in the central area of their longitudinal extension and then slope upwards, wherein they run to a point (15) open forwards to the point and the point is provided as a board-shaped upright sidewall (9,10) and in this way in the front area the lower edge (14) of the sidewall (9, 10) is formed in the shape of a ski sloping upwards to the rounded point (15) of the upper edge (16) of the sidewalls (9,10).

5. A transfer device according to one or more of claims 1 to 4, characterised in that the end region (22c) of the lower guide edge (22a)
is bent downwards to the point (15) so that the guide grooves (22) open on to the respective point (15) in the form of a funnel and thereby it is guaranteed that the guide plate (26) swings aside downwards.

6. A transfer device according to one or more of claims 1 to 5, characterised in that the parallel sidewalls (9, 10) are connected together at the rear by a further connector (11) and also by a cover wall (12) to form an internal space (13).

7. A transfer device according to one or more of claims 1 to 6, characterised by a drive mechanism for the forwards and the backwards movement of the chains (24).

8. A transfer mechanism according to claim 7, characterised in that the drive mechanism is a piston cylinder system (28) which sits on the surface (27) of the cover wall (12) and whose piston rod (29) projects rearwards and is connected to the connector (25).

9. A transfer device according to one or more of claims 3 to 8, characterised in that under the sidewalls (9, 10) in the region underneath the slope (23) is arranged a receiver rod (8) which is so positioned that it is also arranged under the moving carrier plate (26) so that it strips the hooks (3) mounted on the carrier plate (26) as one unit from the carrier plate (26) when the carrier plate (26) is pulled back and the hooks (4) slide on the receiver rod (8).

10. A transfer device according to claim 9, characterised in that the receiver rod (8) has screw threads (7) for the automatic removal of the hangers.

11. A transfer device according to one or more of claims 1 to 10, characterised in that the guide grooves (22) are C-shaped in cross-section.

## Revendications

1. Dispositif de transfert pour les produits d'un transporteur interne suspendu, avec lequel des cintres (2), ou similaires, constituant des dispositifs de portage, comportant des crochets (3) et suspendus en ligne, les uns derrière les autres, à une barre support (1) d'un chariot porteur, sont transférés du chariot porteur sur un autre dispositif de portage ou de transport, et comportant un dispositif de reprise (26) disposé de façon à pouvoir avancer et reculer transversalement par rapport à la direction du transport des chariots porteurs et soulevant les cintres (2) en bloc, depuis le chariot porteur, au moyen d'une arête porteuse (32), caractérisé en ce que le dispositif de reprise (26) est guidé le long d'une piste de guidage montant vers la barre support (1) de telle façon que son arête porteuse (32), placée sous de la barre support (1) du chariot porteur, se déplace depuis le dessous pour venir dans la partie cintrée (4) du crochet (3) du cintre (2), puis, ensuite, continue à se déplacer encore un peu plus loin vers l'avant et le haut, et en ce que la piste de guidage a un tracé coudé vers le bas, se raccordant à sa partie montante, de façon que le dispositif de reprise se rabatte vers le bas et, en reculant dans la piste de guidage, passe donc, avec son arête porteuse, suffisamment en dessous de la barre support (1) pour que les crochets (3), avec leur partie cintrée (4), n'entrent plus en collision avec la barre support (1).

2. Dispositif de transfert suivant la revendication 1, caractérisé en ce que le dispositif de reprise (26) est une tôle porteuse qui, dans sa partie d'extrémité avant, est légèrement coudée vers le haut.

3. Dispositif de transfert suivant la revendication 1 et/ou la revendication 2, caractérisé en ce que la tôle porteuse (26) est, dans sa partie arrière, sur chacune de ses arêtes latérales, reliée à au moins un maillon situé à l'extrémité avant de chaînes à maillons (24), elles-même reliées, à leurs extrémités arrière, les unes avec les autres par l'intermédiaire d'une barrette de liaison (25) non flexible, les chaînes à maillons (24) étant montées de façon à pouvoir glisser en avant et en arrière dans les rainures de guidage (22) formant piste de guidage pour la tôle porteuse, rainures qui sont réalisées dans les faces internes (21) des parois latérales (9, 10) du dispositif de transfert.

4. Dispositif de transfert suivant l'une quelconque ou plusieurs des revendications 1 à 3, caractérisé en ce que les rainures de guidage (22) présentent une arête de guidage inférieure (22a) et une arête de guidage supérieure (22b), qu'elles sont disposées les unes en face des autres et sont réalisées, sensiblement dans la zone médiane de leur extension longitudinale, avec une inclinaison vers le bas (23) et ont ensuite un tracé incliné vers le haut, étant entendu qu'elles se terminent en une pointe (15), en étant ouvertes vers la pointe, et que chacune de ces pointes est prévue sur une paroi latérale (9, 10) en forme de plat dressé sur champ, du dispositif de transfert (6) et est réalisée en donnant, dans la partie avant, à l'arête inférieure (14) de la paroi latérale (9, 10) une forme de patin incliné vers le haut, conduisant vers la pointe arrondie (15) des parois latérales (9, 10).

5. Dispositif de transfert suivant l'une quelconque ou plusieurs des revendications 1 à 4, caractérisé en ce que la zone d'extrémité (22c) des arêtes de guidage inférieures (22a), allant vers la pointe (15), est coudée vers le bas de telle façon que les rainures de guidage (22) s'ouvrent en forme d'entonnoir à chacune des pointes (15) concernées, et que, de ce fait, le rabattement vers le bas de la tôle de guidage (26) soit assuré.

6. Dispositif de transfert suivant l'une quelconque ou plusieurs des revendications 1 à 5, caractérisé en ce que les parois latérales (9, 10), disposées parallèlement l'une par rapport à l'autre, sont reliées entre elles, dans leur partie arrière, par une autre barette de liaison (11) et, de plus, par une cloison de couverture (12) et forment un volume fermé (13).

7. Dispositif de transfert suivant l'une quelconque ou plusieurs des revendications 1 à 6, caractérisé par un dispositif d'entraînement assurant un mouvement vers l'avant et un mouvement vers l'arrière des chaînes (24).

8. Dispositif de transfert suivant la revendication 7, caractérisé en ce que le dispositif d'entraînement est un dispositif à vérin (28), qui est placé sur la surface supérieure (27) de la cloison de couverture (12), et dont la tige de piston (29) dépasse vers l'arrière et est reliée avec la barrette de liaison (25).

9. Dispositif de transfert suivant l'une quelconque ou plusieurs des revendications 3 à 8, caractérisé en ce que, sous les parois latérales (9, 10), dans la partie située en dessous des plans inclinés (23), est disposée une barre de réception (8), positionnée de manière à être également en dessous de la tôle porteuse (26) se reculant en arrière, de façon à récupérer en bloc, sur la tôle porteuse, les crochets de cintre (3) se trouvant sur la tôle porteuse (20) lors du recul de la tôle porteuse (26), et à faire glisser les crochets de cintres (4) sur la barre de réception (8).

10. Dispositif de transfert suivant la revendication 9, caractérisé en ce que la barre de réception (8) présente des spirales en hélice (7) pour le transfert automatique des cintres.

11. Dispositif de transfert suivant l'une quelconque ou plusieurs des revendications 1 à 10, caractérisé en ce que les rainures de guidage (22) sont réalisées avec une section en forme de C.
